# EUROPÄISCHE PATENTANMELDUNG

(11) **EP 1 835 072 A1**
(43) Veröffentlichungstag der Anmeldung: **19.09.2007**
(21) Anmeldenummer: 06126609.4
(22) Anmeldetag: 20.12.2006
(51) Int. Cl.: D21F 7/02, D21G 1/00

(54) **Antriebsbaugruppe zum Antreiben einer Walze**

(30) Priorität: 14.03.2006 DE 102006011632
(71) Anmelder: Voith Patent GmbH, 89522 Heidenheim (DE)
(72) Erfinder: Müller, Ansgar, 89522 Heidenheim (DE)

(57) **Zusammenfassung**

Die Erfindung betrifft eine Antriebsbaugruppe für eine angetriebene Walze, insbesondere als Bestandteil einer Papiermaschine oder einer Papierveredlungsmaschine oder einer Papierverarbeitungsmaschine, umfassend einen Walzenmantel (2);
- mit einem Lagerzapfen (4) zum Aufbringen eines Drehmomentes auf die Walze (1);
- mit einer den Lagerzapfen (4) tragenden Lagereinrichtung (11);
- mit einer Antriebseinheit, die die Lagereinrichtung (11) antreibt;

Eine solche Antriebsbaugruppe umfaßt gemäß der Erfindung die folgenden Merkmale:
- die Antriebseinheit besteht nur aus einem Elektromotor (5) mit einem Stator (6) und einem Rotor (7);
- der Elektromotor (5) ist ein Aufsteckmotor, der auf das freie Ende des Lagerzapfens (4) aufgesteckt und mit diesem drehfest verbunden ist;
- die Lagereinrichtung (11) umfaßt ein radial geteiltes Lager (13) mit einem radial geteilten Lagergehäuse (12).

## Beschreibung

Die Erfindung betrifft eine Antriebsbaugruppe zum Antreiben einer Walze, insbesondere als Bestandteil einer Papiermaschine oder einer Papierveredelungsmaschine oder einer Papierverarbeitungmaschine.

Als Walzen kommen beispielsweise Preßwalzen, Umlenkwalzen, Walzen von Rollenschneidmaschinen oder Trockenzylinder als Bestandteil der Trockengruppe einer Papiermaschine in Betracht.

Es sind Antriebsbaugruppen mit einem Stirnradgetriebe bekannt geworden, das ein Ritzel umfaßt. Das Ritzel kämmt mit einem Außenzahnkranz, der seinerseits mit dem Lagerzapfen der Walze drehfest verbunden ist. Der Lagerzapfen ist mittels eines Lagers an einem Abstützbock gelagert. Siehe DE 196 07 678 C1.

Die Lager, die dem einzelnen Lagerzapfen zugeordnet sind, haben eine begrenzte Lebensdauer. Fällt ein Lager aus, so muß es ausgebaut und durch ein neues Lager ersetzt werden. Hierzu ist es aber notwendig, zuvor auch den Motor auszubauen. Solche Wartungs- und Reparaturarbeiten sind aufwendig.

Es ist bekannt, sogenannte Direktantriebsmotoren vorzusehen, die derart montiert werden, dass sie zum Lagerwechsel wieder demontiert werden können. Bei hochbelasteten Wellen, beispielsweise an Duostabilisatorwalzen, geschieht dies mittels Kegelpressverbänden. Diese müssen geschliffene Flächen aufweisen und sind daher teuer.

Der Erfindung liegt die Aufgabe zugrunde, eine Antriebsbaugruppe zum Antreiben einer Walze, beziehungsweise eine Walze mit einer solchen Antriebsbaugruppe, derart zu gestalten, dass ein Austausch eines schadhaften Lagers mit einem geringeren Aufwand möglich ist, als dies bei bekannten Antriebsbaugruppen beziehungsweise kompletten Walzen mit Antriebsbaugruppe bisher möglich war.

Die Aufgabe wird durch die Merkmale der selbstständigen Ansprüche gelöst. Demgemäß wird folgendes vorgesehen:
- es wird als Antrieb lediglich ein Elektromotor verwendet, das heißt ohne weitere mechanische Antriebselemente wie Gelenkwellen, Untersetzungsgetriebe oder dergleichen;
- der Elektromotor ist ein sogenannter Aufsteckmotor, der mit dem freien Ende des Lagerzapfens drehfest verbunden wird;
- die Lagereinrichtung umfaßt ein radialgeteiltes Lager, dessen Teile auf den Lagerzapfen in radialer Richtung aufgesetzt und miteinander werden können.

### Hieraus ergeben sich die folgenden Vorteile:

Bei der Gestaltung der gesamten Antriebsbaugruppe braucht keine Rücksicht auf das Demontieren eines schadhaften Lagers sowie das Montieren eines neuen Lagers genommen zu werden. Der Rotor des Motors wird sich im allgemeinen radial innerhalb des Stators befinden. Er kann derart auf dem Lagerzapfen aufgekeilt sein, dass die Verbindung unlösbar ist. Auch kann der Lagerzapfen an seinem motorseitigen Ende einen Flansch aufweisen, der mit dem Rotor des Motors verschraubbar oder anderweitig drehfest verbindbar ist. Der Lagerzapfen weist dann zwei Flansche auf, einen in Motornähe, und einen im Bereich des Walzendeckels. Der Walzenzapfen hat somit zwei dicke Enden. Aufgrund der erfindungsgemäßen Verwendung eines geteilten Lagers spielt dies aber keine Rolle. Dieses kann in jedem Falle montiert werden. Auch können gegebenenfalls Lagerdeckel sowie Labyrinthdichtungen zum Zwecke ihrer Montierbarkeit geteilt ausgeführt werden.

Bei der genannten Gestaltung des Lagerzapfens gibt es zwei Möglichkeiten des Vorgehens:
Zum einen kann das bei der Erstmontage verwendete Lager ein "normales" Lager sein, das heißt ein nicht-geteiltes Lager. Im Falle eines Schadens wird das schadhafte Lager entfernt, und durch ein neues, geteiltes Lager ersetzt.
   Zum anderen kann auch von vornherein ein geteiltes Lager verwendet werden.
Die Vorteile, die sich aus der Erfindung ergeben, lassen sich wie folgt zusammenfassen:
   - der Austausch eines schadhaften Lagers gegen ein neues Lager ist extrem einfach und damit kostengünstig
   - es bedarf keiner kostenspieligen Schleifoperationen von Kegelpreßverbänden, wie dies seither notwendig ist
   - die Anzahl der Einzelteile wird minimiert
   - eine Kerbwirkung auf dem Lagerzapfen, so wie dies bei Pressverbänden der Fall ist, tritt nicht ein. Demgemäß läßt sich der Walzenzapfendurchmesser verringern
   - es entfallen Fügestellen, was sich günstig auf die Fertigungstoleranzen auswirkt
   - falls eine nicht demontierbare Verbindung vorgesehen wird, können Lagergehäuse unverändert bleiben.

Die Erfindung ist anhand der Zeichnungen näher erläutert. Darin ist im einzelnen folgendes dargestellt:
- Figur 1: zeigt in schematischer Darstellung eine erste Ausführungsform einer Antriebsbaugruppe im Aufriss, teilweise geschnitten.
- Figur 2: zeigt eine zweite Ausführungsform einer Antriebsbaugruppe, wiederum teilweise geschnitten.

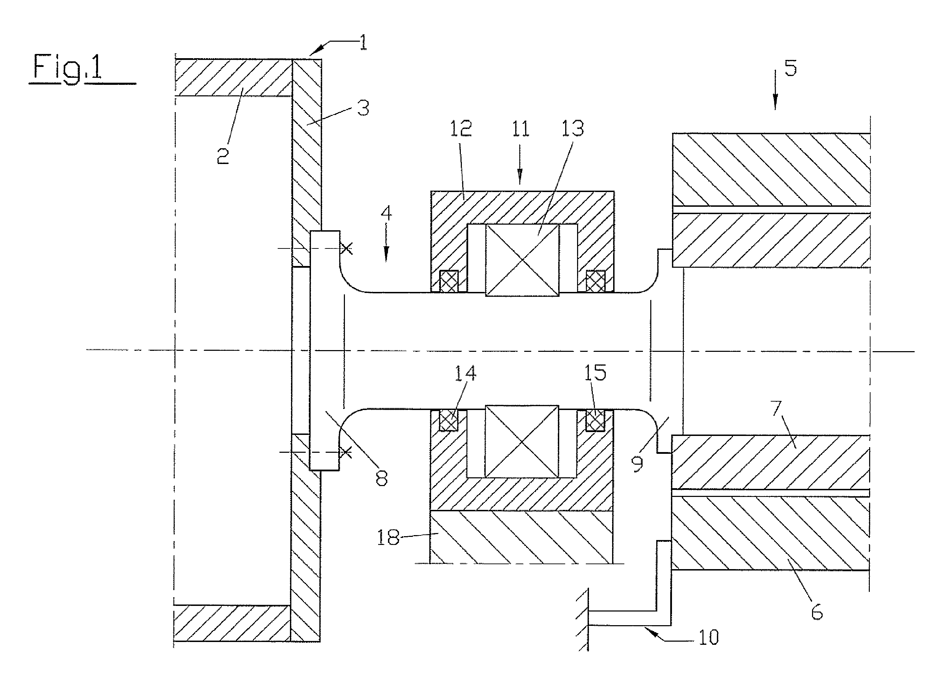

### Im einzelnen erkennt man in Figur 1 folgendes:

Eine Walze 1 ist Bestandteil einer Walzenpresse. Von der Walze 1 ist nur das antriebsseitige Ende dargestellt. Die Walze weist einen Walzenmantel 2 auf, ferner einen Walzendeckel 3.

Man erkennt ferner einen Lagerzapfen 4. Dieser ist mit seinem in der Figur linksseitigen Ende an den Walzendeckel 3 angeschraubt und somit mit diesem drehfest verbunden.

Das andere Ende des Lagerzapfens 4 trägt einen Elektromotor 5. Dabei handelt es sich um einen sogenannten Aufsteckmotor. Dies bedeutet, dass der Elektromotor 5 auf das in der Figur rechte Ende des Lagerzapfens 4 aufgesteckt oder aufgeschoben ist. Der Motor umfasst in üblicher Weise einen Stator 6 und einen Rotor 7. Wie man erkennt, umschließt der Rotor 7 den Lagerzapfen 4. Dabei ist eine drehfeste Verbindung zwischen diesen beiden hergestellt, beispielsweise durch Aufschrumpfen durch eine Vielkeilverbindung oder durch eine Schraubverbindung.

Der Lagerzapfen 4 weist zwei Flansche auf, nämlich einen walzenseitigen Flansch 8 sowie einen motorseitigen Flansch 9. Die beiden Flansche 8 und 9 sind einteilig mit dem übrigen Körper des Lagerzapfens 4. Bei dem Lagerzapfen kann es sich um ein Schmiedeteil handeln. Der motorseitige Flansch 9 dient gleichzeitig als Anschlag für den Rotor 7 des Elektromotors 5 beim Aufschieben auf den Lagerzapfen 4.

Der Stator 6 des Elektromotors 5 ist mit einer ortsfesten Drehmomentenstütze 10 fest verbunden.

Man erkennt ferner eine Lagereinrichtung 11. Diese umfasst ein Lagergehäuse 12 sowie ein Wälzlager 13. Sowohl das Lagergehäuse 12 als auch das Wälzlager 13 sind geteilt. Gleiches gilt für Dichtungen wie Labyrinthdichtungen oder dergleichen. Siehe die Dichtungen 14 und 15.
Aufgrund der Ausbildung des Lagerzapfens 4 mit den beiden Flanschen 8 und 9 ist die Teilbarkeit der Komponenten der Lagereinrichtung 11 unerlässlich. Die Anwendung einer einteiligen Lagereinrichtung wäre nicht möglich. Demgemäß wird bereits bei der Erstmontage eine geteilte Lagereinrichtung 11 verwendet. Dies gilt natürlich auch für eine spätere Montage, die dann stattzufinden hat, wenn die Lagereinrichtung 11 ausfällt.

In jedem Falle lässt sich die Lagereinrichtung 11 ohne Schwierigkeit montieren.

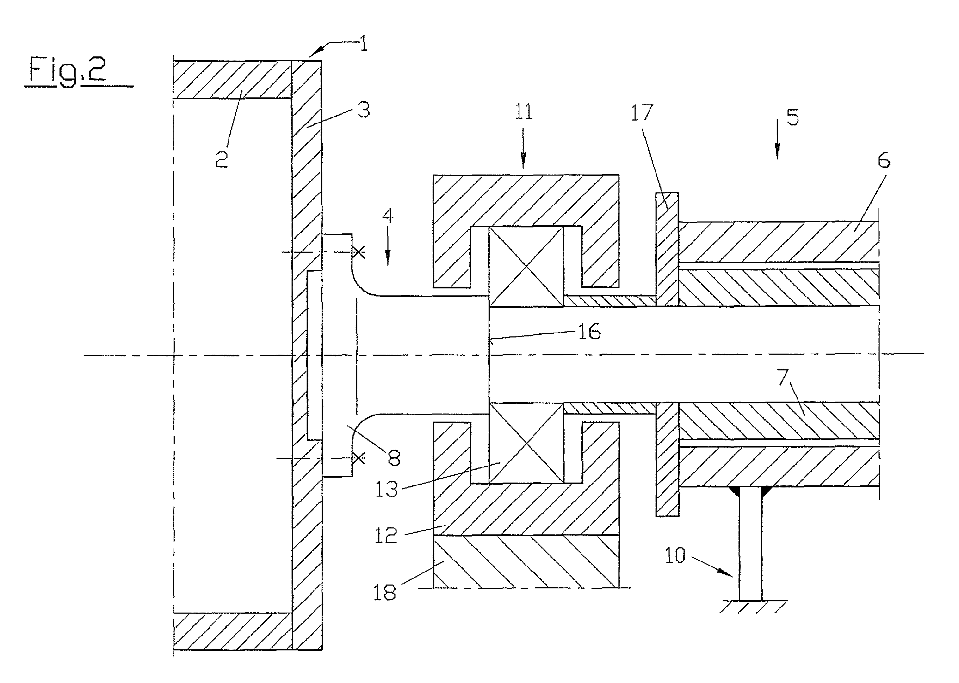

Bei der Ausführungsform gemäß Figur 2 erkennt man wiederum eine Walze 1 mit Walzenmantel 2 und Walzendeckel 3. Hierbei kann es sich wiederum um eine Presswalze handeln, aber auch um andere Anwendungsfälle, beispielsweise um einen angetriebenen Trockenzylinder einer Papiermaschine, oder um eine angetriebene Walze für eine Rollenschneidmaschine, oder um eine angetriebene Walze für einen Kalander, oder um eine angetriebene Saugwalze.

Auch bei der Ausführungsform gemäß Figur 2 ist wiederum ein Lagerzapfen 4 vorhanden. Dieser weist an seinem walzenseitigen Ende einen Flansch 8 auf.

Das walzenferne Ende trägt wiederum einen Aufsteckmotor 5 mit einem Stator 6 und einem Rotor 7.

Im Gegensatz zur Ausführungsform gemäß Figur 1 ist der Lagerzapfen 4 bei der Ausführungsform gemäß Figur 2 nicht mit einem motorseitigen Flansch versehen.

Die Lagereinrichtung 11 kann genauso aufgebaut sein wie jene der Ausführungsform gemäß Figur 1. Sie umfasst somit ein Lagergehäuse 12 und ein Wälzlager 13. Die Lagereinrichtung 11 ist auch hierbei vorzugsweise geteilt.

Der Motor 10, genauer gesagt dessen Rotor 7, ist auf das in der Figur rechte Ende des Lagerzapfens 4 wiederum aufgesteckt oder aufgeschoben. Dabei besteht eine drehfeste Verbindung zwischen dem Rotor 7 des Elektromotors 5 und dem Lagerzapfen 4. Die drehfeste Verbindung kann hergestellt sein durch thermisches Fügen, gegebenenfalls in Kombination mit dem Herstellen eines Pressverbandes. Ein Demontieren oder Abziehen des Elektromotors 5 vom Lagerzapfen 4 ist sodann nicht oder nur sehr schwer möglich.

Wie man sieht, weist der Lagerzapfen einen Absatz 16 auf. Dieser dient als Anschlag für den Innenring des Wälzlagers 13. Ferner ist eine Distanzhülse 17 vorgesehen, die sich zwischen dem Innenring des Wälzlagers 13 und dem in der Figur linken Ende des Elektromotors 5 befindet, und die mit ihren axialen Stirnflächen Anschläge für den Innenring des Wälzlagers 13 und den Motor bildet.

Die (zulässige) Grenzdrehzahl eines geteilten Lagers kann niedriger sein als diejenige eines ungeteilten Lagers. Da jedoch gemäß der Erfindung Aufsteckmotoren verwendet werden, die keine hohen Drehzahlen haben, sind die geteilten Lager auch nicht gefährdet.

Ein besonders interessanter Anwendungsfall der Erfindung liegt immer dann vor, wenn der Lagerzapfen 4 eine (teilweise oder völlig) durchgängige Axialbohrung aufweist, und wenn eine zu starke Flächenpressung beim Aufstecken des Elektromotors 5 auf den durch die Bohrung geschwächten Lagerzapfen 4 vermieden wird, so zum Beispiel bei Saugwalzen für Papiermaschinen.

Außerdem ist es sehr zweckmäßig, wenn der Lagerzapfen 4 hohl gebohrt ist. Durch eine oder auch mehrere dieser Hohlräume bzw. Längsbohrungen können vorhandene Versorgungsleitungen, Absaugungen laufen und damit sehr geordnet untergebracht werden.

Die Lagereinrichtung 11 kann mittig zwischen den miteinander zugewandten Stirnflächen von Walze 1 und Elektromotor 5 angeordnet sein. Es kann sich aber auch empfehlen, sie nach der einen oder der anderen Seite hin axial zu versetzen. Eine Anordnung nahe beim Elektromotor 5 kann zweckmäßig sein, um das durch dessen Eigengewicht erzeugte Moment abzufangen.

Das Lagergehäuse 12 ist bei beiden Ausführungsformen auf einer Stuhlung oder einem Lagerbock 18 gelagert.

### Bezugszeichenliste

- 1: Walze
- 2: Walzenmantel
- 3: Walzendeckel
- 4: Lagerzapfen
- 5: Elektromotor
- 6: Stator
- 7: Rotor
- 8: Walzenseitiger Flansch
- 9: Motorseitiger Flansch
- 10: Drehmomentenstütze
- 11: Lagereinrichtung
- 12: Lagergehäuse
- 13: Wälzlager
- 14: Dichtung
- 15: Dichtung
- 16: Absatz
- 17: Distanzhülse
- 18: Stuhlung oder Lagerbock

## Patentansprüche

1. Antriebsbaugruppe zum Antreiben einer Walze (1) mit einem Walzenmantel (2), insbesondere als Bestandteil einer Papiermaschine oder einer Papierveredlungsmaschine oder einer Papierverarbeitungsmaschine, mit:
- einem Lagerzapfen (4) zum Aufbringen eines Drehmomentes auf die Walze (1);
- mit einer den Lagerzapfen (4) tragenden Lagereinrichtung (11);
- mit einer Antriebseinheit, die die Lagereinrichtung (11) antreibt;
**gekennzeichnet durch** die folgenden Merkmale:
- die Antriebseinheit besteht nur aus einem Elektromotor (5) mit einem Stator (6) und einem Rotor (7);
- der Elektromotor (5) ist ein Aufsteckmotor, der auf das freie Ende des Lagerzapfens (4) aufgesteckt und mit diesem drehfest verbunden ist;
- die Lagereinrichtung (11) umfaßt ein radial geteiltes Lager (13) mit einem radial geteilten Lagergehäuse (12).

2. Antriebsbaugruppe nach Anspruch 1,
**dadurch gekennzeichnet, dass** die Lagereinrichtung (11) ein Wälzlager (13) umfaßt.

3. Antriebsbaugruppe nach Anspruch 1 oder 2,
**dadurch gekennzeichnet, dass** der Rotor (7) des Elektromotors (5) mit dem walzenfernen Ende des Lagerzapfens (4) durch eines oder mehrere der nachstehenden Mittel drehfest verbunden ist,
- durch Aufschrumpfen
- durch Thermofügen
- durch Preßverbund
- durch Passfedern oder Keile
- durch Schrauben und/oder Passbolzen

4. Antriebsbaugruppe nach einem der Ansprüche 1 bis 3,
**dadurch gekennzeichnet, dass** der Lagerzapfen (4) einen walzenseitigen oder einen motorseitigen Flansch (8, 9) aufweist.

5. Antriebsbaugruppe nach einem der Ansprüche 1 bis 3,
**dadurch gekennzeichnet, dass** der Lagerzapfen (4) einen walzenseitigen und einen motorseitigen Flansch (8, 9) aufweist.

6. Antriebsbaugruppe nach einem der Ansprüche 1 bis 5,
**dadurch gekennzeichnet, dass** der Stator (6) des Elektromotors (5) durch eine Drehmomentenstütze (10) gegen die feste Umgebung abgestützt ist.

7. Antriebsbaugruppe nach einem der Ansprüche 1 bis 6,
**dadurch gekennzeichnet, dass** die Lagereinrichtung (11) in der Mitte zwischen den zueinander zugewandten Stirnflächen von Walze (1) und Elektromotor (5) angeordnet ist.

8. Antriebsbaugruppe nach einem der Ansprüche 1 bis 6,
**dadurch gekennzeichnet, dass** die Lagereinrichtung (11) so nah wie möglich beim Elektromotor (5) angeordnet ist.

9. Walze (1), insbesondere als Bestandteil einer Papiermaschine oder einer Papierveredlungsmaschine oder einer Papierverarbeitungsmaschine, mit einem Walzenmantel (2);
- mit einem Lagerzapfen (4) zum Aufbringen eines Drehmomentes auf die Walze (1);
- mit einer den Lagerzapfen (4) tragenden Lagereinrichtung (11);
- mit einer Antriebseinheit, die die Lagereinrichtung (11) antreibt;
**gekennzeichnet durch** die folgenden Merkmale:
- die Antriebseinheit besteht nur aus einem Elektromotor (5) mit einem Stator (6) und einem Rotor (7);
- der Elektromotor (5) ist ein Aufsteckmotor, der auf das freie Ende des Lagerzapfens (4) aufgesteckt und mit diesem drehfest verbunden ist;
- die Lagereinrichtung (11) umfaßt ein radial geteiltes Lager (13) mit einem radial geteilten Lagergehäuse (12).

10. Walze (1) nach Anspruch 9,
**gekennzeichnet durch** die Merkmale eines oder mehrerer der kennzeichnenden Ansprüche 1 bis 8.

11. Walze (1) nach Anspruch 9 oder 10,
**dadurch gekennzeichnet, dass** der Lagerzapfen (4) hohl ausgebildet ist und durch wenigstens einen Hohlraum, insbesondere Bohrung, Versorgungsleitungen, Absaugungen usw. durchgeführt sind.
